# EUROPEAN PATENT APPLICATION

(11) **EP 4 757 032 A1**
(43) Date of publication of application: **10.06.2026**
(21) Application number: 24848050.1
(22) Date of filing: 19.07.2024
(51) Int. Cl.: H01M 50/244, B60K 1/04, B60L 50/60

(54) **MOUNT BRACKET AND BATTERY PACK USING SAME**

(30) Priority: 31.07.2023 CN 202322042593 U
(71) Applicant: Eve Energy Co. Ltd., Huizhou, Guangdong 516000 (CN)
(72) Inventor: WANG, Dongrui, Huizhou, Guangdong 516000 (CN)
(74) Representative: Michalski Hüttermann & Partner mbB
(86) International application number: PCT/CN2024/106482
(87) International publication number: WO 2025/026091

(57) **Abstract**

The present disclosure discloses a mounting bracket and a battery pack using the same. The mounting bracket includes a first mounting member and a second mounting member. The first mounting member includes a supporting portion and attaching portions, the supporting portion is configured to be disposed towards a box of a battery pack, and the supporting portion is configured to be connected to a bottom of the box of the battery pack. The second mounting member includes an abutting portion and installing portions, the abutting portion is configured to be disposed towards the box of the battery pack, and the abutting portion is configured to be connected to a side wall of the box of the battery pack. Each of the attaching portions is connected to one of the installing portions to connect the first mounting member and the second mounting member.

## Description

### CROSS-REFERENCE TO RELATED APPLICATION(S)

This application claims priority to Chinese Patent Application No. 2023220425935, filed with the Chinese Patent Office on July 31, 2023, and entitled "MOUNTING BRACKET AND BATTERY PACK USING THE SAME", the entire disclosure of which is hereby incorporated by reference.

### TECHNICAL FIELD

This disclosure relates to the field of battery technology, and particularly, to a mounting bracket and a battery pack using the same.

### BACKGROUND

With the development from fuel-powered vehicles to pure electric vehicles, hybrid electric vehicle becomes one of the preferred technical solutions at present phase.

At present, most battery packs are configured as profile boxes and the aluminum extrusion profiles being used have the advantages of light and thin material quality and strong corrosion resistance.

### Technical Problems

With high cost and relatively weak structural strength, the aluminum profile box requires reinforcement through a cavity structure formed by reserved space. Moreover, the scraps generated by the processing of existing production machines are prone to be kept and accumulated in the cavity structure and are difficult to be cleaned away, causing abnormal noises and risk of short circuit. In addition, water is prone to be accumulated at the connection between the box of the battery pack and the vehicle frame, while prolonged water accumulation can easily corrode the box of the battery pack.

### Technical Solutions

In a first aspect, a mounting bracket is provided in the present disclosure. The mounting bracket includes a first mounting member and a second mounting member. The first mounting member includes a supporting portion and attaching portions, the supporting portion is configured to be disposed towards a box of a battery pack, and the supporting portion is configured to be connected to a bottom of the box of the battery pack. The second mounting member includes an abutting portion and installing portions, the abutting portion is configured to be disposed towards the box of the battery pack, and the abutting portion is configured to be connected to a side wall of the box of the battery pack. Each of the attaching portions is connected to one of the installing portions, so as to connect the first mounting member and the second mounting member.

In a second aspect, a battery pack is provided in the present disclosure. The battery pack includes a box and the aforementioned mounting bracket. The mounting bracket is implemented as at least two mounting brackets, and the at least two mounting brackets respectively connects to two opposite side walls of the box and connects to a bottom of the box.

### Beneficial effects

By providing the first mounting member and the second mounting member, the supporting portion of the first mounting member is configured to be connected to the bottom of the battery pack, the abutting portion of the second mounting member is configured to be connected to the side wall of the battery pack; and each of the attaching portions of the first mounting member is connected to one of the installing portions of the second mounting member, so as to connect the first mounting member and the second mounting member. Thus, the supporting portion and the abutting portion are both configured to be disposed towards the battery pack, so that a pressure generated by the battery pack is dispersed onto the first mounting member and the second mounting member respectively for better stress transfer, thereby preventing the pressure generated by the battery pack from being completely concentrated on the whole mounting bracket, reducing stress fatigue of the mounting bracket, and prolonging a service lifespan of the mounting bracket.

### BRIEF DESCRIPTION OF THE DRAWINGS

FIG. 1 is a perspective view of a mounting bracket according to an embodiment of the present disclosure.
FIG. 2 is an exploded view of a mounting bracket according to an embodiment of the present disclosure.
FIG. 3 is a perspective view of a battery pack according to an embodiment of the present disclosure.

The meanings of the reference signs are as follows:
1 - first mounting member; 10 - first inner-concave; 101 - first turned edge; 11 - supporting portion; 12 - attaching portion; 121 - attaching hole; 122 - first groove; 13 - leakage hole; 14 - hemmed edge; 2 - second mounting member; 20 - second inner-concave; 201 - second turned edge; 21 - abutting portion; 22 - installing portion; 221 - installing hole; 222 - second groove; 3 - connecting member; 31 - connecting hole; 4 - box; 41 - stiffening girder.

### DETAILED DESCRIPTION

### Embodiment 1

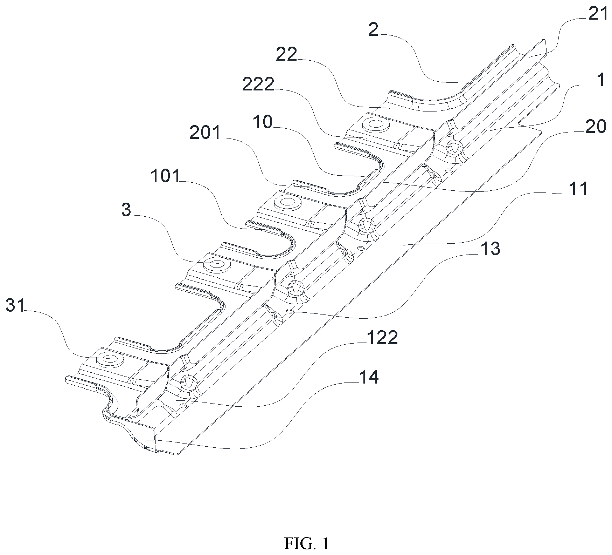

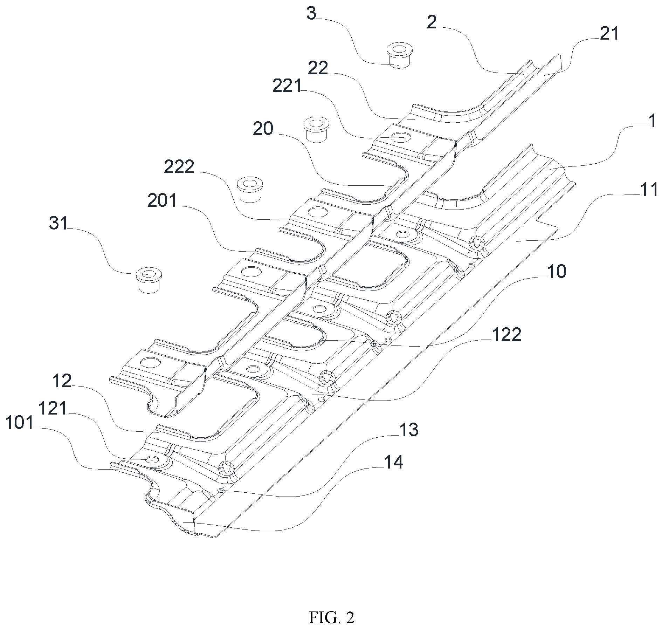

As illustrated in FIG. 1 and FIG. 2, a mounting bracket is provided in an embodiment of the present disclosure. The mounting bracket includes a first mounting member 1 and a second mounting member 2.

The first mounting member includes a supporting portion 11 and attaching portions 12. The supporting portion 11 is configured to be disposed towards a box of a battery pack, and the supporting portion 11 is configured to be connected to a bottom of the box of the battery pack, so that a pressure generated at the bottom of the battery pack is transferred to a vehicle frame via the first mounting member 1. Preferably, leakage holes 13 are defined at connections of the supporting portion 11 and the attaching portions 12. The second mounting member 2 includes an abutting portion 21 and installing portions 22. The abutting portion 21 is configured to be disposed towards the box of the battery pack, and the abutting portions 21 are configured to be connected to a side wall of the box of the battery pack, so that a pressure generated at the side wall of the battery pack is transferred to the vehicle frame via the second mounting member 2.

By dispersing the pressure generated by the battery pack onto the first mounting member 1 and the second mounting member 2 respectively, better stress transfer is achieved, thereby preventing the pressure generated by the battery pack from being completely concentrated on the whole mounting bracket, reducing stress fatigue of the mounting bracket, and prolonging service lifespan of the mounting bracket. In addition, by defining the leakage holes 13 at the connections of the supporting portion 11 and the attaching portions 12, when the water is accumulated, the water can flow along the installing portions 22 to the leakage holes 13, and then flow away from the leakage holes 13, thereby preventing the box of the battery pack from corrosion caused by prolonged water accumulation.

Specifically, each of the attaching portions 12 is connected to one of the installing portions 22, so as to connect the first mounting member 1 and the second mounting member 2, thus the supporting portion 11 and the abutting portions 21 are both configured to be disposed towards the battery pack, and thereby jointly supporting the battery pack. At the same time, stress is transferred to achieve an effect of pressure dispersion.

In some embodiments, the attaching portions 12 define multiple attaching holes 121, and the installing portions 22 define multiple installing holes 221 at positions corresponding to the multiple attaching holes 121. Connecting members 3 pass through the multiple attaching holes 121 and the multiple installing holes 221, so as to connect the attaching portions 12 and the installing portions 22, thus the first mounting member 1 and the second mounting member 2 are connected. The first mounting member 1 and the second mounting member 2 are disposed in a layered form, thus stress generated by the battery pack can be transferred at different heights, achieving pressure dispersion.

In some embodiments, the attaching portions 12 define first grooves 122 at positions corresponding to the multiple attaching holes 121, and the first grooves 122 extend towards the supporting portion 11, thus strength and stiffness of the first mounting member 1 are improved to better support a bottom of the battery pack, thereby performing better stress transfer. More specifically, the installing portions 22 define second grooves 222 at positions corresponding to the multiple installing holes 221, and the second grooves 222 extend towards the abutting portion 21, thus strength and stiffness of the second mounting member 2 are improved to better fix the side wall of the battery pack, thereby performing better stress transfer. Preferably, the attaching portions 12 are recessed in a direction away from the installation portions 22 to form the first grooves 122, the installing portions 22 are recessed in a direction away from the attaching portions 12 to form the second grooves 222, and each of the first grooves 122 and one of the second grooves 222 enclose to define margin space. The margin space can accommodate more deformation caused by the stress, thus playing a role of buffering and achieving better effect of stress dispersion.

In some embodiments, each of the connecting members 3 defines a connecting hole 31 in an arrangement direction of the first mounting member 1 and the second mounting member 2. The connecting hole 31 is configured to allow a fixing member to pass through the connecting hole 31, so as to fix the mounting bracket to the vehicle frame, thereby the stress can be transferred to the vehicle frame, enabling the battery pack to be firmly mounted on the vehicle frame.

In some embodiments, the first mounting member 1 has two opposite ends, a hemmed edge 14 is formed at one end, and the other is an open end. When the first mounting member 1 is mounted on the vehicle frame, the end where the hemmed edge 14 is formed faces towards a front of a vehicle, and the open end faces towards a rear of the vehicle. Thus, the accumulated water on a periphery of the box of the battery pack can be shook away by inertia from the open end of the first mounting member 1 during running of the vehicle. Furthermore, the hemmed edge 14 can block water splashed during the running of the vehicle, so as to prevent the water from accumulating again, thereby the accumulated water is removed more thoroughly to prevent corrosion.

In some embodiments, an extending direction of the abutting portion 21 and an extending direction of installing portion 22 are perpendicular to each other, thus the abutting portion 21 and the side wall of the battery pack can be connected more tightly, and the stress can be transferred in a same direction, thereby facilitating the transmission of the stress on the side wall of the battery pack and the stress on a bottom of the battery pack to the vehicle frame via the installing portions 22 and attaching portions 12.

In some embodiments, the attaching portions 12 are implemented as at least two attaching portions 12, a first inner-concave 10 is defined between any adjacent two attaching portions of the at least two attaching portions 12, and a first turned edge 101 is formed on an edge of the first inner-concave 10. Similarly, the installing portions 22 are implemented as at least two installing portions 22, a second inner-concave 20 is defined between any adjacent two installing portions of the at least two installing portions 22, and a second turned edge 201 is formed on an edge of the second inner-concave 20. In practice, according to the vehicle frame to be attached, the attaching portions 12 can be disposed with equal intervals therebetween or with non-equidistant intervals therebetween, and the installing portions 22 can be disposed with equal intervals therebetween or with non-equidistant intervals therebetween.

By means of the aforementioned configuration, the strength of the first mounting member 1 and the second mounting member 2 is improved. Thus, in the case of mechanical misuse, such as vibration and extrusion, a pressure generated by the extrusion can be counteracted, and thereby better protecting the box of the battery pack.

### Embodiment 2

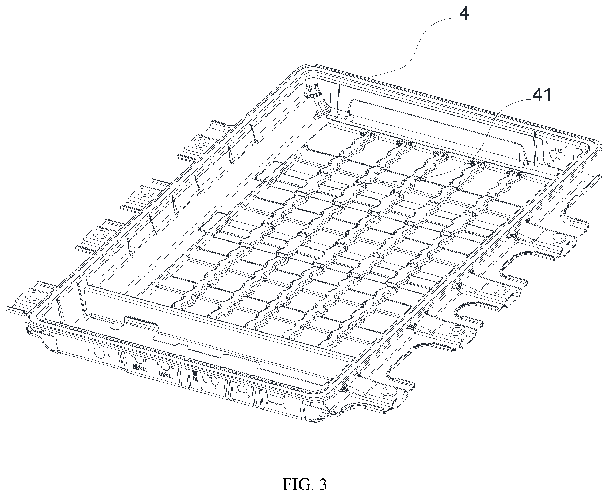

Based on the same design, as illustrated in FIG. 3, an embodiment of a battery pack is further disclosed in the present disclosure, where the battery pack includes a box 4 and the aforementioned mounting bracket.

At least two mounting brackets are provided, and the at least two mounting brackets respectively connects to two opposite side walls of the box 4 and connects to a bottom of the box 4, so as to disperse a pressure onto the first mounting member 1 and the second mounting member 2, thereby better stress transfer is achieved. Additionally, drainage can be carried out through leakage holes 13 to prevent corrosion caused by prolonged water accumulation on the periphery of the box 4.

In some embodiments, a stiffening girder 41 is disposed in the box 4, and two ends of the stiffening girder 41 respectively extends towards two opposite side walls of the box 4, so as to improving the strength of the two opposite side walls of the box 4. As such, in the case of mechanical misuse, such as vibration and extrusion, irreparable distortion of the box 4 caused by excessive deformation of the box 4 can be avoided, and the box 4 can be further prevented from being damaged caused by the irreparable distortion of the box 4.

### Embodiment 3

Based on the same design, an electrical device is provided in an embodiment of the present disclosure, where the electronic device includes the aforementioned battery pack.

## Claims

1. A mounting bracket, comprising:
a first mounting member (1), wherein the first mounting member (1) comprises a supporting portion (11) and attaching portions (12), the supporting portion (11) is configured to be disposed towards a box of a battery pack, and the supporting portion (11) is configured to be connected to a bottom of the box of the battery pack; and
a second mounting member (2), wherein the second mounting member (2) comprises an abutting portion (21) and installing portions (22), the abutting portion (21) is configured to be disposed towards the box of the battery pack, and the abutting portion (21) is configured to be connected to a side wall of the box of the battery pack;
wherein each of the attaching portions (12) is connected to one of the installing portions (22) to connect the first mounting member (1) and the second mounting member (2).

2. The mounting bracket according to claim 1, wherein the attaching portions (12) define a plurality of attaching holes (121), the installing portions (22) define a plurality of installing holes (221) at positions corresponding to the plurality of attaching holes (121); and connecting members (3) pass through the plurality of attaching holes (121) and the plurality of installing holes (221) to connect the attaching portions (12) and the installing portions (22).

3. The mounting bracket according to claim 2, wherein the attaching portions (12) define first grooves (122) at positions corresponding to the plurality of attaching holes (121), and the first grooves (122) extend towards the supporting portion (11).

4. The mounting bracket according to claim 3, wherein installing portions (22) define second grooves (222) at positions corresponding to the plurality of installing holes (221), and the second grooves (222) extend towards the abutting portion (21).

5. The mounting bracket according to claim 4, wherein attaching portions (12) are recessed in a direction away from the installation portions (22) to form the first grooves (122), the installing portions (22) are recessed in a direction away from the attaching portions (12) to form the second grooves (222), and each of the first grooves (122) and one of the second grooves (222) enclose to define margin space.

6. The mounting bracket according to claim 2, wherein each of the connecting members (3) defines a connecting hole (31), and the connecting hole (31) is configured to allow a fixing member to pass through the connecting hole (31) to fix the mounting bracket to a vehicle frame.

7. The mounting bracket according to any one of claims 1 to 6, wherein leakage holes (13) are defined at connections of the supporting portion (11) and the attaching portions (12).

8. The mounting bracket according to any one of claims 1 to 6, wherein the attaching portions (12) are implemented as at least two attaching portions (12), a first inner-concave (10) is defined between any adjacent two attaching portions of the at least two attaching portions (12), and a first turned edge (101) is formed on an edge of the first inner-concave (10); and/or the installing portions (22) are implemented as at least two installing portions (22), a second inner-concave (20) is defined between any adjacent two installing portions of the at least two installing portions (22), and a second turned edge (201) is formed on an edge of the second inner-concave (20).

9. A battery pack, comprising:
a box (4);
the mounting bracket according to any one of claims 1 to 8, wherein the mounting bracket is implemented as at least two mounting brackets, and the at least two mounting brackets respectively connects to two opposite side walls of the box (4) and connects to a bottom of the box (4).

10. The battery pack according to claim 9, a stiffening girder (41) is disposed in the box (4), and two ends of the stiffening girder (41) respectively extends towards the two opposite side walls of the box (4).
